# EUROPÄISCHE PATENTSCHRIFT

(11) **EP 3 482 913 B1**
(45) Veröffentlichungstag und Bekanntmachung des Hinweises auf die Patenterteilung: **30.11.2022**
(21) Anmeldenummer: 18203787.9
(22) Anmeldetag: 31.10.2018
(51) Int. Cl.: B29C 64/357, B29C 64/153, B29C 64/165, B29C 64/255, B29C 64/259, B22F 3/105

(54) **3D-DRUCK-VORRICHTUNG UND -VERFAHREN**
3D PRINTING DEVICE AND METHOD
DISPOSITIF D'IMPRESSION TRIDIMENSIONNELLE ET PROCÉDÉ

(30) Priorität: 13.11.2017 DE 102017126665
(43) Veröffentlichungstag der Anmeldung: 15.05.2019
(73) Patentinhaber: EOS GmbH Electro Optical Systems, 82152 Krailling (DE)
(72) Erfinder: Otzmann, Florian, 80687 München (DE); Jung, Frank, 82131 Gauting (DE); Prillwitz, Alexander, 80686 München (DE); Paternoster, Stefan, 82346 Andechs (DE); Grünberger, Stefan, 81739 München (DE); Müller, Frank, 81377 München (DE); Döhl, Lena, 82393 Iffeldorf (DE); Tenbrink, Stephan, 80689 München (DE)
(74) Vertreter: Beckord & Niedlich Patentanwälte PartG mbB

(56) Entgegenhaltungen:
- EP-A1- 1 194 281
- EP-A1- 2 281 677
- EP-A1- 2 929 961
- WO-A1-2017/084781
- WO-A1-2017/108868
- WO-A2-98/28124
- DE-A1-102009 029 765

## Beschreibung

Die Erfindung betrifft eine Vorrichtung gemäß vorliegendem Anspruch 1 und ein Herstellungsverfahren gemäß vorliegendem Anspruch 12.

Die Erfindung bezieht sich auf eine Vorrichtung zum Herstellen von dreidimensionalen Bauteilen aus einem pulverförmigen Aufbaumaterial durch schichtweises Auftragen des Aufbaumaterials und zumindest partielles Verfestigen des Aufbaumaterials einer Schicht durch selektives Bestrahlen von einem Querschnitt des herzustellenden Bauteils entsprechenden Stellen der Schicht mit zumindest einem Energiestrahl, beispielsweise einem Elektronen- oder Laserstrahl, mit einem Baubehälter bzw. Wechselrahmen zur Aufnahme des Aufbaumaterials, mit einem Beschichter zum schichtweisen Auftragen des Aufbaumaterials und mit mindestens einem Überlaufbehälter zur Aufnahme eines unbenutzten Materialrests des Aufbaumaterials eines Herstellungsvorgangs. Je nach Arbeitsweise des Beschichters, nämlich einem Schichtaufbau in nur einer Arbeitsrichtung oder in zwei entgegengesetzten Richtungen, kann die Vorrichtung einen oder zwei Überlaufbehälter umfassen. Sie liegen jeweils in Arbeitsrichtung des Beschichters hinter dem Baubehälter.

Bei der additiven Fertigung, landläufig auch als "3D-Druck" bekannt, werden dreidimensionale Bauteile auf Basis von computergenerierten Steuerbefehlen hergestellt. Ein besonders prominentes Beispiel für additive Fertigung ist unter dem Namen "Selektives Lasersintern bzw. Laserschmelzen" bekannt. Dabei wird wiederholt eine dünne Schicht eines regelmäßig pulverförmigen Aufbaumaterials aufgebracht, das in jeder seiner Schichten durch selektives Bestrahlen von einem Querschnitt des herzustellenden Bauteils entsprechenden Stellen mit einem Laserstrahl selektiv verfestigt wird. Dies erfolgt in der Regel unter Schutzgasatmosphäre und bei Temperaturen von etwa 50°C, regelmäßig von um die 100°C oder auch mehreren 100°C als Prozessatmosphäre. WO 2017/084781 A1 offenbart eine Vorrichtung und ein Verfahren zum Herstellen von dreidimensionalen Bauteilen aus einem pulverförmigen Aufbaumaterial. WO2017108868 beschreibt eine Vorrichtung gemäß dem Oberbegriff von Anspruch 1.

Es ist eine Aufgabe der vorliegenden Erfindung, die additive Fertigung von dreidimensionalen Bauteilen aus einem pulverförmigen Aufbaumaterial kostengünstiger zu gestalten.

Diese Aufgabe wird durch die Vorrichtung und das Verfahren gemäß vorliegender Ansprüche 1 und 13 gelöst. Je nach der oben bereits erwähnten Arbeitsweise des Beschichters kann die Vorrichtung einen, zwei oder mehrere Überlaufbehälter und ebenso einen, zwei oder mehrere Zwischenbehälter umfassen. Im Folgenden wird der Einfachheit halber von nur einem Zwischenbehälter und einem Überlaufbehälter ausgegangen, womit grundsätzlich auch die Anordnung mehrerer Zwischenbehälter und mehrerer Überlaufbehälter sinngemäß umfasst sein soll.

Der unbenutzte Materialrest ist derjenige Anteil des Aufbaumaterials eines Auftragsvorgangs, der zum Aufbau einer Schicht auf einer vorangegangenen Schicht oder dem Boden des Baubehälters bzw. auf einer Bauplattform im Baubehälter nicht herangezogen wird. Er wird vielmehr als überschießendes Material bzw. als Reserve zum zuverlässigen Verhindern eines Defizits an Aufbaumaterial vor dem Beschichter her geführt und am Ende des Auftragsvorgangs aus dem Baubehälter ausgetragen.

Der Zwischenbehälter nimmt den unbenutzten Materialrest eines Beschichtungsvorgangs auf. Anschließend gibt der Zwischenbehälter den Materialrest an den Überlaufbehälter ab, um für eine erneute Aufnahme eines Materialrests zumindest teilweise entleert zur Verfügung zu stehen. Damit können die Dimensionen des Zwischenbehälters geringer ausfallen als die des Überlaufbehälters. Denn jener muss den unbenutzten Materialrest eines gesamten Herstellungsvorgangs mit einer Vielzahl von Auftragsvorgängen bis zur Fertigstellung eines oder mehrerer zu fertigender Bauteile aufnehmen.

Die Erfindung wendet sich also davon ab, den Materialrest jedes Beschichtungsvorgangs in einem großen Überlaufbehälter aufzufangen, der neben dem oder zumindest in unmittelbarer Nähe zum Baubehälter angeordnet ist und dort bei Wartungsarbeiten am Baubehälter stören kann. Die Erfindung verfolgt vielmehr das Prinzip, nur Teilmengen des insgesamt anfallenden Materialrests, welche der Menge des unbenutzten Materialrests eines Auftragsvorgangs entsprechen, zunächst in einem Zwischenbehälter aufzunehmen, der prozesstechnisch bedingt nahe dem Baubehälter angeordnet ist, und den Zwischenbehälter anschließend in den Überlaufbehälter zu entleeren, der entfernt vom Baubehälter positioniert sein kann. Damit gelingt es, den Materialrest eines Beschichtungsvorgangs schneller aus dem unmittelbaren Umfeld des Baubehälters zu entfernen, das in der Regel hohen Temperaturen ausgesetzt ist. Je schneller der pulverförmige Materialrest aus dem Bereich hoher Temperaturen entfernt werden kann, umso geringer kann - beispielsweise bei kunststoffbasierten Pulvern als Aufbaumaterial - seine wärmebedingte Materialschädigung oder -beeinträchtigung ausfallen, die ihn für einen erneuten Einsatz als Aufbaumaterial unbrauchbar machen kann. Seine Entfernung vom Baubehälter dient damit seinem hohen Rezyklierungsgrad, womit sich der Betrieb der Vorrichtung verbilligen kann.

Es braucht also anstelle des großen Überlaufbehälters nur noch ein kleiner Zwischenbehälter in unmittelbarer Nähe des Baubehälters angeordnet zu sein. Damit gewinnt die Vorrichtung außerdem Bauraum im Bereich des Baubehälters, der jenem für Einrichtungen wie Beheizung, Wärmedämmung oder dergleichen zugutekommen kann. Außerdem kann der Überlaufbehälter an einem Ort innerhalb der Vorrichtung angeordnet sein, der zum Beispiel sein Entleeren bequemer ermöglicht oder eine Entnahme des Baubehälters aus der Vorrichtung weniger oder gar nicht behindert.

Die Transportvorrichtung kann grundsätzlich kontinuierlich oder intermittierend arbeiten. Erfindungsgemäß umfasst die Vorrichtung einen mechanisch oder fluidisch, insbesondere pneumatisch angetriebenen Stetigförderer als Transportvorrichtung. Als mechanischer Stetigförderer kann beispielsweise ein Förderband bzw. Gurtförderer mit einem Gummigurt mit Gewebeeinlagen, einem Fasergurt oder einem Stahlband die Transportvorrichtung bilden. Alternativ kann ein pneumatisch angetriebener Stetigförderer die Fließbarkeit des pulverförmigen Materialrests durch Mischen mit Transportluft verbessern, eine zumindest teilweise Fluidisierung des Pulvers bewirken oder eine Art Luftkissen bilden, auf dem der Materialrest abfließen kann. Vorzugsweise kann Transportluft zugleich als Kühlung des Materialrests eingesetzt werden. Gegebenenfalls kann die Transportluft sowohl blasend als auch saugend eingesetzt werden.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen Ausführungsbeispielen kombiniert werden können.

Der Zwischenbehälter wird in den Überlaufbehälter entleert. Grundsätzlich lässt sich der Materialrest aus dem Zwischenbehälter in beliebigen Richtungen zwischen einer rein horizontalen und einer rein vertikalen Richtung abtransportieren. Ein möglichst schnelles Abfließen aus dem Zwischenbehälter lässt sich unter Nutzung der auf den Materialrest einwirkenden Schwerkraft und damit in im Wesentlichen vertikaler Richtung erreichen, womit eine Aufenthaltszeit des Materialrests innerhalb des Zwischenbehälters sehr kurz ausfällt. Gemäß der Erfindung erfolgt der Abtransport des Materialrests durch eine rinnenförmige Ausbildung und vorzugsweise geneigte Anordnung des Bodens des Zwischenbehälters in Richtung des Überlaufbehälters. Das Entleeren des Zwischenbehälters kann also schwerkraftgetrieben aus dem Zwischenbehälter heraus unmittelbar oder mittelbar über weitere Rinnen oder Rohre in den Überlaufbehälter hinein erfolgen.

Der Boden des Zwischenbehälters kann nur eine einzige Neigung aufweisen, womit eine Abgabe des Zwischenbehälters beispielsweise im Bereich einer Ecke des regelmäßig rechteckigen Baubehälters liegen kann. Alternativ kann der Boden zwei aufeinander zu geneigte Abschnitte gleicher oder unterschiedlicher Neigung aufweisen, womit der Zwischenbehälter eine trichterähnliche Form erhält. Damit kann sich eine Förderstrecke von Teilen des Materialrests verkürzen. Eine Abgabe des Zwischenbehälters kann dann bezüglich einer Seite des Baubehälters bei gleicher Neigung im Wesentlichen mittig und bei ungleicher Neigung außermittig angeordnet sein..

Gemäß der Erfindung umfasst die Vorrichtung einen rinnenförmigen, aber nicht zwingend geneigten Zwischenbehälter und eine im Zwischenbehälter wirkende Transportvorrichtung. Sie soll eine möglichst große Aufnahme- oder Aufgabefläche für den pulverförmigen Materialrest aufweisen, der regelmäßig auf der gesamten Breite des Baubehälters in den Zwischenbehälter geschoben wird. Eine in seiner Längsrichtung wirkende Transportvorrichtung kann durch eine Neigung des Zwischenbehälters unterstützt werden. Sie kann dessen Neigung aber auch erübrigen, was Bauraumvorteile bieten kann. Jedenfalls kann die Transportvorrichtung einen schnellen und zuverlässigen Abtransport des Materialrests aus dem Zwischenbehälter und damit ggf. in eine Region geringerer Temperatur innerhalb der Vorrichtung sicherstellen.

Die Transportvorrichtung kann als eigenes Aggregat in dem Zwischenbehälter angeordnet sein. Alternativ kann der Zwischenbehälter selbst Bestandteil der Transportvorrichtung sein, beispielsweise wenn er als Schwingförderer ausgebildet ist. Dazu kann der Zwischenbehälter zumindest ein Teil einer Rinne eines Schwing- oder Wuchtrinnenförderers oder einer Schüttelrutsche sein, wobei der Materialrest durch Reibung oder Wurf auf dem in periodische hin- und hergehende Bewegungen versetzten Zwischenbehälter gleitend oder in kleinen Sprüngen fortbewegt wird. Schwingförderer eigenen sich grundsätzlich auch für heiße Güter und zeichnen sich durch einfache Ausführung aus, weil der Förderer auf seiner Förderstrecke nur den Zwischenbehälter als Rinne bzw. Rutsche ohne stark verschleißende Teile umfasst. Der Antrieb des Schwingförderers kann vom Baubehälter bzw. von einer im Betrieb der Vorrichtung erwärmten Prozesskammer und damit von der dortigen Prozessatmosphäre entfernt angeordnet sein.

Nach einer weiteren vorteilhaften Ausgestaltung der Erfindung kann die Vorrichtung einen Schnecken- oder Wendelförderer als Transportvorrichtung umfassen. Letzterer unterscheidet sich vom Schneckenförderer durch eine fehlende Schneckenwelle, womit er zu mehr Raum zur Aufnahme des Materialrests im Zwischenbehälter führt. Beide bieten eine einfache Konstruktion, eine leichte Wartung und geringe Querschnittsmaße. Um eine möglichst große Abförderbreite des Zwischenbehälters in Bewegungsrichtung des Beschichters zu erreichen, kann der Schnecken- bzw. Wendelförderer vorzugsweise zwei parallel angeordnete und gegenläufig rotierende Schnecken bzw. Wendeln umfassen. Damit kann der Zwischenbehälter doppelt so breit wie tief dimensioniert werden, was für eine verlustfreien Aufnahme des Materialrests im Zwischenbehälter nach Abschluss eines Beschichtungsvorgangs günstig ist.

Nach einer weiteren vorteilhaften Ausgestaltung der Erfindung kann die Vorrichtung einen in dem Zwischenbehälter in dessen Längsrichtung verlaufenden Kettenförderer als Transportvorrichtung umfassen. Wie der oben erwähnte Gurtförderer umfasst er ein kontinuierlich in eine Transportrichtung laufendes Zugmittel mit einem oberen und einem unteren Trum. Er kann als Kratzerförderer oder als Trogkettenförderer ausgebildet sein. Beide erlauben - anders als der Gurtförderer - eine Aufgabe des pulverförmigen Materialrests durch das leer zurücklaufende obere Kettentrum hindurch auf das untere Lasttrum. Damit kann die Tiefe des Zwischenbehälters insbesondere bei schwallartiger Aufgabe des Materialrests auf die Transportvorrichtung vorteilhafter Weise vollständig genutzt werden. Alternativ kann der Kettenförderer auch zu einem beidseitigen Abtransport des Materialrests ausgelegt sein, indem durch Anordnung eines waagrechten Zwischenblechs zwischen dem oberen und dem unteren Trum über einen Abschnitt der Längserstreckung des Zwischenbehälters auch das obere Trum im Bereich des Zwischenblechs zum Lasttrum wird. Während der Kratzerförderer den Materialrest mit an einer umlaufenden Zugkette quer zur Förderrichtung befestigten Mitnehmern transportiert, läuft beim Trogkettenförderer die Zugkette samt ihren Querstegen und/oder daran ausgebildeten Mitnehmern vollständig im Förderstrom. Damit kann der Trogkettenförderer einen besonders platzsparenden Aufbau bieten.

Grundsätzlich kann auch ein Stetigförderer intermittierend betrieben werden. Er kann also in Betrieb gesetzt werden, sobald ein Materialrest nach einem Beschichtungsvorgang in den Zwischenbehälter abgegeben wird. Sobald der Zwischenbehälter vollständig entleert ist, kann die Transportvorrichtung ggf. abgeschaltet werden, wenn das Zeitintervall bis zur Aufgabe des nächsten Materialrests eines weiteren Beschichtungsvorgangs ausreichend lang ist.

Nach einer alternativen Ausgestaltung der Erfindung kann die Vorrichtung einen alternierend betriebenen Förderer als Transportvorrichtung umfassen. Er fördert nicht kontinuierlich, sondern in einzelnen Intervallen. Damit kann er sich zudem für einen intermittierenden Betrieb und für eine Anpassung seiner Förderleistung während seines Betriebs anbieten. Der Zwischenbehälter kann beispielsweise mehrere in Förderrichtung und in der Gegenrichtung hin und her bewegbare Mitnehmer aufweisen, die in Förderrichtung querliegend und um 90° drehbar angeordnet sind. Weil sie sowohl in der Förderrichtung als auch in der Gegenrichtung auf derselben Bahn laufen, erfordert die Transportvorrichtung einen geringeren Platzbedarf im Zwischenbehälter. Dessen Volumen kann damit nahezu vollständig für die Aufnahme des Materialrests dimensioniert sein.

Nach einer weiteren vorteilhaften Ausgestaltung eines alternierend betriebenen Förderers kann die Vorrichtung ein im Zwischenbehälter in dessen Längsrichtung alternierend bewegtes Förderelement als Transportvorrichtung umfassen. Das Förderelement kann sich waagrecht erstrecken und nach unten und in die Förderrichtung geneigt abstehende Lamellen umfassen. Die Lamellen ragen in den Materialrest hinein und schieben ihn in der Förderrichtung. In der Gegenrichtung gleiten die Lamellen über den pulverförmigen Materialrest hinweg. Zusätzlich können die Lamellen durchbrochen, beispielsweise rahmenförmig ausgebildet sein. Damit kann das pulverförmige Material bei einer Bewegung des Förderelements in der Gegenrichtung durch die Lamellen hindurchtreten, um nicht transportiert zu werden. Das Kratzer- oder Lamellenblech als Förderelement braucht nur eine geringe Bauhöhe aufzuweisen, womit der Bauraum des Zwischenbehälters nahezu vollständig für die Aufnahme des Materialrests zur Verfügung steht.

Nach einer vorteilhaften Ausgestaltung der Erfindung kann der Antrieb des alternierend bewegten Förderelements ein Koppelgetriebe umfassen, das dessen langsamen Vorlauf in Förderrichtung und einen schnellen Rücklauf in der Gegenrichtung bewirkt. Damit lässt sich die Förderleistung durch Nutzung der Trägheit des Materialrests steigern. Denn in der langsam bewegten Förderrichtung wird der Materialrest vollständig in Bewegung versetzt. In der schnell bewegten Gegenrichtung dagegen verharrt der Materialrest aufgrund seiner Trägheit weitgehend unbewegt.

Nach einer weiteren vorteilhaften Ausgestaltung der Erfindung kann der Antrieb ein Koppelgetriebe umfassen, das das alternierend bewegte Förderelement in der Förderrichtung absenkt und in der Gegenrichtung anhebt. Damit tauchen die Lamellen in der Förderrichtung in den pulverförmigen Materialrest ein, um ihn effizient zu transportieren. In der Gegenrichtung dagegen heben sich die Lamellen aus dem Materialrest heraus, um ihn nicht zu bewegen. Damit erhält das Förderelement bei gleicher Effizienz ein ausgeglicheneres Bewegungsprofil, das einen geringeren Verschleiß verursacht.

Schließlich kann die Transportvorrichtung eine Kombination der oben genannten Förderprinzipien umsetzen.

Bei einer flachen Ausbildung des Zwischenbehälters kann der Baubehälter nach einer weiteren vorteilhaften Ausgestaltung der Erfindung unter dem Zwischenbehälter hindurch aus der Vorrichtung entnehmbar sein, ohne dass der Überlaufbehälter die Entnahme behindert. Dadurch wird es möglich, den Baubehälter vor seiner Entnahme durch eine Schutzgasschleuse hindurch zu führen und den Überlaufbehälter an eine für einen Bediener leichter zugänglichen Ort in der Vorrichtung anzuordnen. Die Anordnung der Schutzgasschleuse dient einem kostengünstigeren Betrieb der Vorrichtung, die neue Anordnung des Überlaufbehälters jedenfalls ihrer bequemeren Bedienung.

Nach einer dazu alternativen Ausgestaltung der Erfindung kann der Zwischenbehälter aus einer Arbeitsposition in eine Serviceposition verfahrbar, zum Beispiel verschwenkbar und/oder verschiebbar ausgebildet, und der Baubehälter in einer Richtung auf die Arbeitsposition des Zwischenbehälters hin aus der Vorrichtung entnehmbar sein. In Maschinennebenzeiten, also außerhalb eines Herstellungsvorgangs, kann der Zwischenbehälter aus einer Arbeitsposition in eine Serviceposition beispielsweise aufwärts in einen leeren Raum der Prozesskammer verfahren werden, um Platz zu schaffen für eine Entnahme des Baubehälters, die in einer Arbeitsposition des Zwischenbehälters durch ihn blockiert wäre. Damit kann der Zwischenbehälter tiefer bzw. nach unten hin größer ausfallen, als es die Platzverhältnisse sonst zuließen, womit er beispielsweise eine raumgreifendere Transportvorrichtung aufnehmen kann.

Nach einer weiteren vorteilhaften Ausgestaltung der Erfindung kann die Vorrichtung eine Temperaturschleuse zur Erzeugung einer Temperaturdifferenz zwischen dem Zwischenbehälter und dem Überlaufbehälter umfassen. Als Temperaturschleuse eignen sich Vorrichtungen wie Verengungen eines Durchgangsquerschnitts oder Streifenvorhänge im Transportweg zwischen dem Zwischenbehälter und dem Überlaufbehälter. Dadurch kann eine Erwärmung jenseits des Baubehälters und des neben ihm angeordneten Zwischenbehälters reduziert werden. Damit lässt sich eine Differenz zwischen einer mittleren Höchsttemperatur im Zwischenbehälter und im Überlaufbehälter von mindestens 30°C, vorzugsweise von mindestens 50°C, weiter bevorzugt von mindestens 100°C, besonders bevorzugt von mindestens 200°C erreichen. Denn je geringer die Temperatur insbesondere im Überlaufbehälter, umso weniger treten Alterungseffekte wie z. B. eine stoffliche Degeneration des Materialrests auf. Damit kann er in größerem Umfang als Aufbaumaterial wiederverwendet werden.

Die eingangs genannte Aufgabe wird außerdem durch ein Verfahren gemäß Anspruch 12 gelöst.

Nach Abschluss des Schritts c) beginnt das Verfahren erneut mit dem Schritt a) zum schichtweisen Auftragen des Aufbaumaterials usw.

Das Auftragen des Aufbaumaterials in Schritt a) kann beispielsweise mit einem Beschichter erfolgen, der als verschiebbarer Balken mit einem Abstand vom Baufeld entsprechend der geplanten Schichtdicke über das Baufeld fährt und eine Portion des pulverförmigen Aufbaumaterials vor sich her schiebt und dabei die Portion weitgehend verzehrt. Das Abtragen eines in diesem Auftrags- bzw. Beschichtungsschritt unbenutzten Materialrests in Schritt b) kann dann bequem durch Abschieben in einen baufeldnahen, nämlich neben dem regelmäßig rechteckigen Baufeld entlang seiner Seite verlaufenden Behälter erfolgen.

Erfindungsgemäß wird der Materialrest jedes Auftragsvorgangs nicht in den endgültigen Überlaufbehälter für die Aufnahme aller Materialreste eines gesamten Herstellungsvorgangs abgegeben, sondern zunächst in einen baufeldnahen Zwischenbehälter, von dem aus er in einen baufeldfernen Überlaufbehälter abgegeben wird. Das Volumen des Zwischenbehälters ist bei weitem nicht für die Aufnahme aller Materialreste ausgelegt, die während eines vollständigen Herstellungsvorgangs eines Objekts anfallen, sondern nur für die Aufnahme einer Teilmenge.

Gemäß der Erfindung wird der Materialrest nur eines Auftragsvorgangs gemäß Schritt a) im Zwischenbehälter vorübergehend aufgenommen. Damit erhält der Materialrest nur eine kurze Verweildauer im baufeldnahen Zwischenbehälter, bevor jener in Richtung des baufeldfernen Überlaufbehälters entleert wird, um einen weiteren Materialrest aus einem folgenden Auftragsvorgang aufnehmen zu können. Die vorübergehende Aufnahme des Materialrests in dem notwendigerweise baufeldnahen Zwischenbehälter ermöglicht seine gezielte Weiterleitung in den baufeldfernen Überlaufbehälter. Jener liegt vorzugsweise in einem Bereich, der gegenüber der Prozessatmosphäre auf dem und in einer Umgebung des Baufelds abgeschirmt und damit jedenfalls nicht der hohen Temperatur des Baufelds unterworfen ist. Dort kann der ungenutzte Materialrest gesammelt werden, ohne durch den Einfluss der Baufeldtemperatur ungewollt zu verbacken und/oder eine stoffliche Schädigung zu erleiden.

Die Erfindung wendet sich also davon ab, alle Materialreste eines vollständigen Herstellungsvorgangs baufeldnah und damit zumindest unter der weitgehenden Einwirkung der Baufeldtemperatur zu sammeln. Sie verfolgt vielmehr das Prinzip, jeden ungenutzten Materialrest eines Auftragsvorgangs zunächst separat aufzufangen, anschließend möglichst umgehend aus der hochtemperierten Prozessatmosphäre des Baufelds zu entfernen und in eine zumindest kühlere Umgebung zu verbringen. Damit lässt sich die Gefahr einer Qualitätsminderung des Materialrests infolge Hitzeeinwirkung deutlich herabsetzen. Dies führt zu einer wirtschaftlicheren Durchführung des erfindungsgemäßen Verfahrens, weil der ungenutzte Materialrest zu höherem Anteil in einem folgenden Herstellungsvorgang als Auftragsmaterial wieder genutzt werden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
- Figur 1:: eine schematische Darstellung einer bekannten Lasersinter- oder Laserschmelzvorrichtung
- Figur 2:: eine Übersichtsskizze über wesentliche Bestandteile der erfindungsgemäßen Vorrichtung,
- Figur 3:: einen Schneckenförderer,
- Figur 4:: einen Kettenförderer,
- Figur 5:: ein alternierend angetriebenes Förderelement, und
- Figur 6:: eine Schnittansicht gemäß der Schnittlinie A - A in Figur 5.

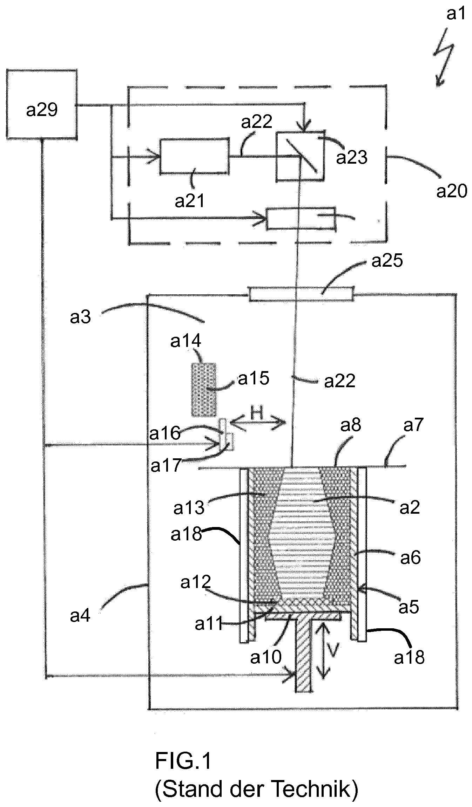

Die in Figur 1 schematisch dargestellte Vorrichtung ist eine an sich bekannte Lasersinter- oder Laserschmelzvorrichtung a1. Zum Aufbauen eines Objekts a2 enthält sie eine Prozesskammer a3 mit einer Kammerwandung a4. In der Prozesskammer a3 ist ein nach oben offener Baubehälter a5 mit einer Wandung a6 angeordnet. Durch die obere Öffnung des Baubehälters a5 ist eine Arbeitsebene a7 definiert, wobei der innerhalb der Öffnung liegende Bereich der Arbeitsebene a7, der zum Aufbau des Objekts a2 verwendet werden kann, als Baufeld a8 bezeichnet wird.

In dem Behälter a5 ist ein in einer vertikalen Richtung V bewegbarer Träger a10 angeordnet, an dem eine Grundplatte a11 angebracht ist, die den Baubehälter a5 nach unten abschließt und damit dessen Boden bildet. Die Grundplatte a11 kann eine getrennt von dem Träger a10 gebildete Platte sein, die an dem Träger a10 befestigt ist, oder sie kann integral mit dem Träger a10 gebildet sein. Je nach verwendetem Pulver und Prozess kann auf der Grundplatte a11 noch eine Bauplattform a12 angebracht sein, auf der das Objekt a2 aufgebaut wird. Das Objekt a2 kann aber auch auf der Grundplatte a11 selber aufgebaut werden, die dann als Bauplattform dient. In Figur 1 ist das in dem Baubehälter a5 auf der Bauplattform a12 zu bildende Objekt a2 unterhalb der Arbeitsebene a7 in einem Zwischenzustand dargestellt mit mehreren verfestigten Schichten, umgeben von unverfestigt gebliebenem Aufbaumaterial a13.

Die Lasersintervorrichtung a1 enthält weiter einen Vorratsbehälter a14 für ein durch elektromagnetische Strahlung verfestigbares pulverförmiges Aufbaumaterial a15 und einen in einer horizontalen Richtung H bewegbaren Beschichter a16 zum Aufbringen des Aufbaumaterials a15 auf das Baufeld a8. In der Prozesskammer a3 ist ferner eine Scanvorrichtung a17 angeordnet, die an dem Beschichter a16 angebracht ist.

Die Lasersintervorrichtung a1 enthält ferner eine Belichtungsvorrichtung a20 mit einem Laser a21, der einen Laserstrahl a22 erzeugt, der über eine Umlenkvorrichtung a23 umgelenkt und durch eine Fokussiervorrichtung a24 über ein Einkoppelfenster a25, das an der Oberseite der Prozesskammer a3 in deren Wandung a4 angebracht ist, auf die Arbeitsebene a7 fokussiert wird.

Weiter enthält die Lasersintervorrichtung a1 eine Steuereinheit a29, über die die einzelnen Bestandteile der Vorrichtung a1 in koordinierter Weise zum Durchführen des Bauprozesses gesteuert werden. Die Steuereinheit a29 kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger a10 um eine Höhe abgesenkt, die der gewünschten Schichtdicke entspricht. Durch Verfahren des Beschichters a16 über die Arbeitsebene a7 wird dann eine Schicht des pulverförmigen Aufbaumaterials a15 aufgebracht. Zu Sicherheit schiebt der Beschichter a16 eine etwas größere Menge an Aufbaumaterial a15 vor sich her, als für den Aufbau der Schicht erforderlich ist. Den planmäßigen Überschuss an Aufbaumaterial a15 schiebt der Beschichter a16 in einen Überlaufbehälter a18. Auf beiden Seiten des Baubehälters a5 ist jeweils ein Überlaufbehälter a18 angeordnet. Das Aufbringen des pulverförmigen Aufbaumaterials a15 erfolgt zumindest über den gesamten Querschnitt des herzustellenden Objekts a2, vorzugsweise über das gesamte Baufeld a8, also den Bereich der Arbeitsebene a7, der durch eine Vertikalbewegung des Trägers a10 abgesenkt werden kann.

Anschließend wird der Querschnitt des herzustellenden Objekts a2 von dem Laserstrahl a22 abgetastet, so dass das pulverförmige Aufbaumaterial a15 an den Stellen verfestigt wird, die dem Querschnitt des herzustellenden Objekts a2 entsprechen. Diese Schritte werden solange wiederholt, bis das Objekt a2 fertiggestellt ist und dem Bauraum entnommen werden kann.

Beim Verfahren des Beschichters a16 über die Arbeitsebene a7 wird die Scanvorrichtung a17 gemeinsam mit diesem verfahren und scannt dabei die Arbeitsebene a7.

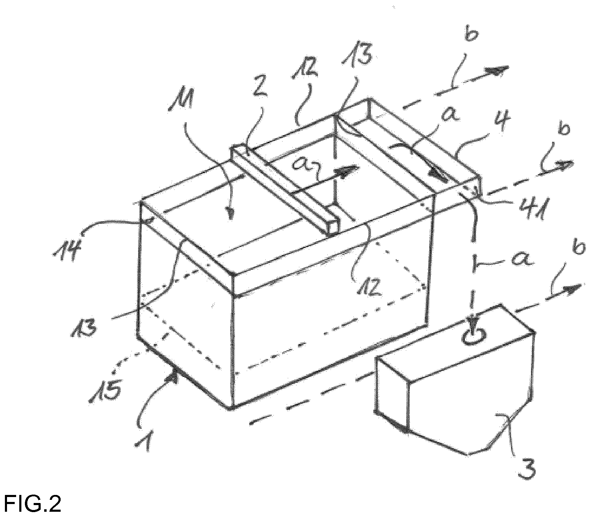

In Figur 2 sind nur für eine Erläuterung der Erfindung wesentliche Bestandteile der Vorrichtung zur additiven Fertigung eines Fertigungsprodukts, d. h. eines dreidimensionalen Objekts, schematisch skizziert. Die Vorrichtung enthält einen quaderförmigen Baubehälter 1 als Prozessraum der Vorrichtung zur Aufnahme von schichtweise einzubringendem pulverförmigem Aufbaumaterial. Der Baubehälter 1 umfasst eine Oberfläche 11 als Baufeld der Vorrichtung, die von zwei Längsseiten 12 und zwei Schmalseiten 13 des Baubehälters 1 umgeben ist. Ein balkenförmiger Beschichter 2 erstreckt sich zwischen den beiden Längsseiten 12 und lässt sich in deren Erstreckungsrichtung über dem Baufeld 11 in einem Rahmen 14 auf dem Baubehälter 1 horizontal hin und her verfahren.

In einem Fertigungsprozess wird (nicht dargestelltes) Aufbaumaterial selektiv verfestigt, wobei das Aufbaumaterial zum Verfestigen auf dem Baufeld 11 mit einem Laserstrahl (nicht gezeigt) selektiv bestrahlt wird und dabei eine Auftrefffläche des Laserstrahls auf dem Baufeld 11 beispielsweise gemäß einer vorgegebenen Bestrahlungsstrategie bewegt wird. Als Aufbaumaterial wird regelmäßig Pulver verwendet, das der Beschichter 2 auf einem vertikal verfahrbaren Boden 15 des Baubehälters 1 schichtweise aufbaut. Der Beschichter 2 verteilt das Pulver in der Richtung eines Pfeils a an der linken Schmalseite 13 beginnend über das Baufeld 11 bis zu dessen rechter Schmalseite 13 hin. Jeweils ein Teil des Pulvers einer frisch aufgebauten Schicht wird mithilfe des Laserstrahls verfestigt. Im Baufeld 11 herrschen Temperaturen um 300°C.

Unbenutztes Aufbaumaterial bzw. Pulver schiebt der Beschichter 2 in Richtung des Pfeils a am Ende eines Auftragsvorgangs über die rechte Schmalseite 13 hinaus in einen rinnenförmigen, im Querschnitt rechteckigen Zwischenbehälter 4. Jener liegt daher unmittelbar neben dem Baubehälter 1 und damit im Einflussbereich der dort herrschenden hohen Temperaturen. Der Zwischenbehälter 4 erstreckt sich zumindest über die gesamte Breite des Baubehälters 1 an dessen rechter Schmalseite 13. Sein Volumen entspricht dem eines Materialrests eines Beschichtungsvorgangs zuzüglich eines Sicherheitszuschlags. Er ist möglichst flach ausgebildet. Seine Breite quer zu seiner Längserstreckung orientiert sich an einer Wurfparabel bzw. einer Flugkurve des mit relativ hoher Geschwindigkeit horizontal ausgetragenen Materialrests.

Der Zwischenbehälter 4 ist an seiner parallel zur vorderen Längsseite 12 des Baubehälters 1 liegenden Schmalseite 41 offen. Über sie wird der Materialrest dem Pfeil a entsprechend in einen Überlaufbehälter 3 befördert. Sein Volumen ist auf die Aufnahme der Materialreste aller Beschichtungsvorgänge eines vollständigen Herstellungsvorgangs hin ausgelegt. Er befindet sich in einem Bereich der Vorrichtung, in der niedrigere Umgebungstemperaturen herrschen, womit eine Schädigung beispielsweise von Polymerpulver als Aufbaumaterial zumindest verringert und damit die Wiederverwendung des Materialrests verbessert wird. Außerdem lässt sich der Überlaufbehälter nun an einem Ort der Vorrichtung unterbringen, der für einen Bediener besonders einfach zugänglich ist. Schließlich lässt sich nun der Baubehälter 1 ggf. auch unter dem Zwischenbehälter 4 hindurch in einer Entnahmerichtung b aus der Vorrichtung entnehmen.

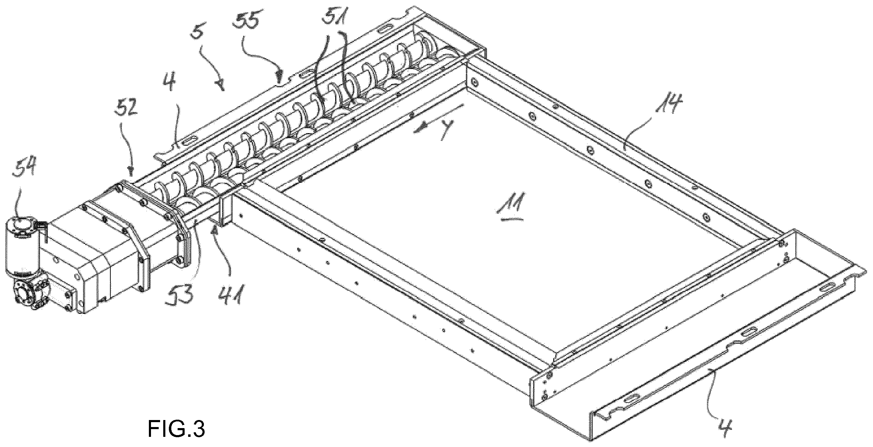

Die flache Bauweise des Zwischenbehälters 4 erfordert einen motorischen Transport des Materialrests in der Längsrichtung des Zwischenbehälters 4 in Richtung der Schmalseite 41. Figur 3 zeigt einen Schneckenförderer 5 als eine erste Ausgestaltungsform einer Transportvorrichtung in einem von zwei Zwischenbehältern 4, die sich am das Baufeld 11 umschließenden Rahmen 14 einander gegenüberliegen. Der vordere Zwischenbehälter 4 ist ohne Schneckenförderer dargestellt, erfordert jedoch ebenfalls einen. Die Transportvorrichtung umfasst eine Doppelschnecke mit zwei gegenläufig angetriebenen und ineinandergreifenden Förderschnecken 51, die oberseitig weitgehend bündig im hinteren Zwischenbehälter 4 liegen und über dessen Schmalseite 41 überstehen. Im Bereich ihres Überstands 52 befindet sich unterseitig eine verdeckte abwärts gerichtete Abgabe für den pulverförmigen Materialrest. Die Schnecken 51 liegen in einem im Querschnitt der Form des Kleinbuchstaben Omega entsprechenden Trog 53, so dass jede Schnecke 51 in einer im Querschnitt halbkreis- oder U-förmigen Schale liegt. Der Trog 53 ist eng an die Förderschnecken 51 angepasst und verhindert damit ein Ausweichen und Liegenbleiben des pulverförmigen Materialrests im Trog 53. In Verlängerung des Überstands 52 ist ein Elektromotor 54 samt Verteilergetriebe als Antrieb der Förderschnecken 51 angebracht.

Der Schneckenförderer 5 bietet eine große Aufgabe- bzw. Zugangsfläche 55, die weitgehend der vollständigen Länge und Breite des Zwischenbehälters 4 entspricht und dessen demgegenüber geringe Tiefe vollständig ausnutzt. Damit bietet der Schneckenförderer 5 eine konstruktiv einfache Konstruktion, leichte Wartung und gute Bauraumausnutzung.

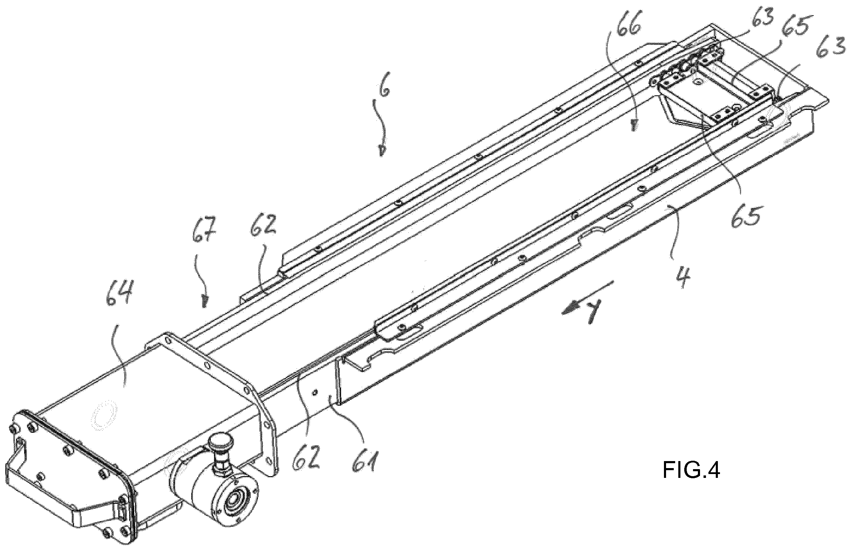

Figur 4 zeigt einen Kettenförderer als alternative Ausgestaltungsform einer Transportvorrichtung. Er liegt oberseitig weitgehend bündig in dem Zwischenbehälter 4, der prinzipiell wie in den Figuren 1 oder 2 angeordnet sein kann. Der Kettenförderer 6 besteht aus einer Rinne 61, die über die offene Schmalseite 41 des Zwischenbehälters 4 übersteht und an ihren Längsrändern 62 zwei nur ausschnittsweise angedeutete parallel umlaufende Ketten 63 führt, und aus einem elektromotorischen Antrieb 64. Zwischen den Ketten 63 sind quer verlaufende rippenförmige Mitnehmer 65 montiert, die die Ketten 63 in Längsrichtung durch den Zwischenbehälter 4 ziehen. Zwischen den Mitnehmern 65 verbleibt genügend Platz, sodass der pulverförmige Materialrest durch einen oberen Leertrum 66 des Kettenförderers 6 hindurch in die Rinne 61 fallen kann. Dort wird er von den Mitnehmern 65 des unteren (nicht dargestellten) Lasttrums zur Schmalseite 41 hin und kurz dahinter in einem Überstand in eine (nicht dargestellte) unterseitige Abgabe in Richtung des Überlaufbehälters 3 (nur Figur 2) befördert. Die Mitnehmer 65 können nach außen abstehend oder in einen Zwischenraum zwischen dem oberen und dem unteren Trum nach Art eines Trogkettenförderers nach innen gerichtet sein. Bei gleicher Bauhöhe bzw. Tiefe des Zwischenbehälters 4 ergeben sich unterschiedliche Umlenkradien der Ketten 63 und im zweiten Fall ein intensiverer Kontakt des Materialrests mit den Ketten 63.

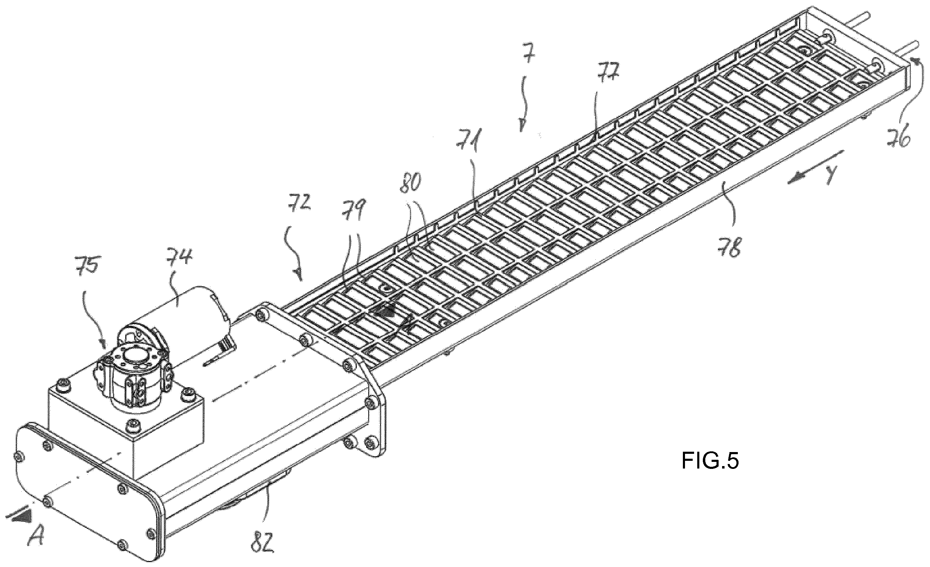

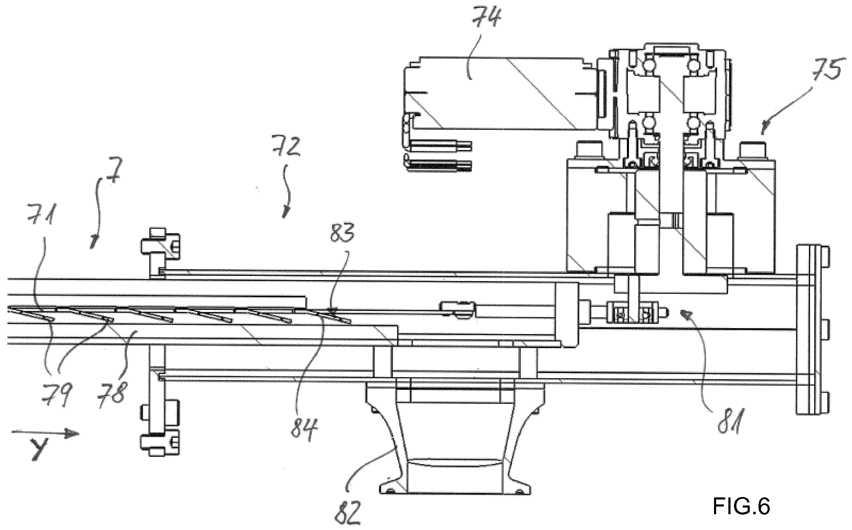

Die Figuren 3 und 4 betreffen Stetigförderer. Figuren 5 und 6 zeigen eine Transportvorrichtung 7 mit einem alternierend angetriebenen flächigen Förderelement 71. Sie ist ohne den Zwischenbehälter 4 der Figuren 2 bis 4 dargestellt, aber hinsichtlich eines Überstands 72 ihm gegenüber vergleichbar den Figuren 3 und 4 dimensioniert. Im Überstand 72 ist unterseitig eine Abgabe 82 für den pulverförmigen Materialrest angeordnet. Ein Elektromotor 74 samt Getriebe 75 sorgt für eine horizontale Hin- und Herbewegung in einer Längserstreckungsrichtung des Zwischenbehälters 4, wofür das Förderelement 71 an seiner dem Motor 74 gegenüberliegenden Seite ein achsengeführtes Linearlager 76 und an seinen Längsseiten lineare Gleitlager 77 in einem Trog 78 aufweist.

Von dem flächigen Förderelement 71 stehen unterseitig streifenförmige Lamellen 79 ab, die quer zur Bewegungsrichtung des Förderelements 71 verlaufen, und in einer Förderrichtung y der Transportvorrichtung 7 geneigt sind, so dass sie eine motorzugewandte Oberseite 83 und eine ihm abgewandte Unterseite 84 (nur Figur 6) bieten. Ihre Flächen enthalten rechteckige Durchbrüche 80. Bei einer Aufgabe des pulverförmigen Materialrests durchtritt er die Durchbrüche 80 und füllt den Trog 78.

Ein in der Schnittdarstellung der Figur 6 zu erkennender Kurbelschleifenantrieb 81 versetzt das Förderelement 71 in eine schnelle, ruckartige Bewegung entgegen der Förderrichtung y und in eine langsamere und gleichmäßige Bewegung in der Förderrichtung y. Pulverförmiges Material im Trog 78 nehmen die Lamellen 79 bei ihrer gleichmäßigen Bewegung in Förderrichtung y mit und befördern es um die Länge eines Hubs des Förderelements 71. Bei der ruckartigen Bewegung des Förderelements 71 in der Gegenrichtung dagegen wird das Material wegen seiner Massenträgheit gegen die Unterseiten 84 der Lamellen 79 gedrückt. Die Durchbrüche 80 ermöglichen es, dass das Material durch die Lamellen 79 hindurch auf deren Oberseiten 83 gelangt. Die anschließende langsamere Bewegung des Förderelements 71 überwindet die Trägheit des Materials und befördert es nun um die Länge eines Hubs weiter in Förderrichtung y und damit der Abgabe 82 zu.

### Bezugszeichenliste

- a1: Lasersinter- oder Laserschmelzvorrichtung
- a2: Objekt
- a3: Prozesskammer
- a4: Kammerwandung
- a5: Baubehälter
- a6: Wandung
- a7: Arbeitsebene
- a8: Baufeld
- a10: bewegbarer Träger
- a11: Grundplatte
- a12: Bauplattform
- a13: unverfestigtes Aufbaumaterial
- a14: Vorratsbehälter
- a15: pulverförmiges Aufbaumaterial
- a16: Beschichter
- a17: Scanvorrichtung
- a18: Überlaufbehälter
- a20: Belichtungsvorrichtung
- a21: Laser
- a22: Laserstrahl
- a23: Umlenkvorrichtung
- a24: Fokussiervorrichtung
- a25: Einkoppelfenster
- a29: Steuereinheit

- 1: Baubehälter
- 2: Beschichter
- 3: Überlaufbehälter
- 4: Zwischenbehälter
- 5: Schneckenförderer
- 6: Kettenförderer
- 7: Transportvorrichtung
- 11: Baufeld
- 12: Längsseite
- 13: Schmalseite
- 14: Rahmen
- 15: Boden
- 41: Schmalseite
- 51: Förderschnecke
- 52: Überstand
- 53: Trog
- 54: Motor
- 55: Aufgabefläche
- 61: Rinne
- 62: Längsrand
- 63: Kette
- 64: Motor
- 65: Mitnehmer
- 66: Oberes Trum
- 67: Überstand
- 71: Förderelement
- 72: Überstand
- 74: Motor
- 75: Getriebe
- 76: Linearlager
- 77: Gleitlager
- 78: Trog
- 79: Lamelle
- 80: Durchbruch
- 81: Kurbelschleifengetriebe
- 82: Abgabe
- 83: Oberseite
- 84: Unterseite

- a: Bewegungsrichtung
- b: Entnahmerichtung
- H: Bewegungsrichtung
- V: Bewegungsrichtung
- y: Förderrichtung

## Patentansprüche

1. Vorrichtung zum Herstellen von dreidimensionalen Bauteilen aus einem pulverförmigen Aufbaumaterial durch schichtweises Auftragen des Aufbaumaterials und teilweises Verfestigen des Aufbaumaterials einer Schicht durch selektives Bestrahlen von einem Querschnitt des herzustellenden Bauteils entsprechenden Stellen der Schicht mit zumindest einem Energiestrahl, mit einem Baubehälter (1) zur Aufnahme des Aufbaumaterials, mit einem Beschichter (2) zum schichtweisen Auftragen des Aufbaumaterials, mit einem Überlaufbehälter (3) zur Aufnahme eines unbenutzten Materialrests eines Herstellungsvorgangs, mit
einem rinnenförmigen Zwischenbehälter (4) zur Aufnahme des unbenutzten Materialrests eines Auftragsvorgangs und im Weiteren zur Abgabe an den Überlaufbehälter (3) und mit
einer im Zwischenbehälter (4) wirkenden Transportvorrichtung (5; 6; 7), **gekennzeichnet durch**
einen mechanisch oder fluidisch angetriebenen Stetigförderer (5; 6) als Transportvorrichtung.

2. Vorrichtung nach Anspruch 1, **gekennzeichnet durch** eine geneigte Anordnung des Zwischenbehälters (4).

3. Vorrichtung nach Anspruch 1 oder 2, **gekennzeichnet durch** einen Schneckenförderer (5) oder Wendelförderer als Transportvorrichtung.

4. Vorrichtung nach Anspruch1 oder 2, **gekennzeichnet durch** einen Gurt- oder Kettenförderer (6) als Transportvorrichtung.

5. Vorrichtung nach einem der obigen Ansprüche, **gekennzeichnet durch** einen alternierend betriebenen Förderer (7) als Transportvorrichtung.

6. Vorrichtung nach Anspruch 5, **gekennzeichnet durch** eine Transportvorrichtung (7) mit einem im Zwischenbehälter (4) in dessen Längsrichtung alternierend bewegten Förderelement (71).

7. Vorrichtung nach Anspruch 5 oder 6, **gekennzeichnet durch** ein Koppelgetriebe zum Antrieb des alternierend bewegten Förderelements (71) in einem langsamen Vorlauf in Förderrichtung (y) und in einem schnellen Rücklauf in der Gegenrichtung.

8. Vorrichtung nach einem der Ansprüche 5 bis 7, **gekennzeichnet durch** ein Koppelgetriebe (81), das das alternierend bewegte Förderelement (71) in der Förderrichtung (y) absenkt und in der Gegenrichtung anhebt.

9. Vorrichtung nach einem der obigen Ansprüche, **dadurch gekennzeichnet, dass** der Baubehälter (1) unter dem Zwischenbehälter (4) hindurch aus der Vorrichtung entnehmbar ist.

10. Vorrichtung nach einem der obigen Ansprüche, **dadurch gekennzeichnet, dass** der Zwischenbehälter (4) zwischen einer Arbeitsposition und einer Serviceposition verfahrbar und der Baubehälter (1) in einer Richtung auf den Zwischenbehälter (4) in dessen Arbeitsposition hin aus der Vorrichtung entnehmbar ist.

11. Vorrichtung nach einem der vorstehenden Ansprüche, **gekennzeichnet durch** eine Temperaturschleuse zur Erzeugung einer Temperaturdifferenz zwischen dem Zwischenbehälter (4) und dem Überlaufbehälter (3).

12. Verfahren zum Herstellen von dreidimensionalen Bauteilen aus einem pulverförmigen Aufbaumaterial in einer Vorrichtung nach einem der Ansprüche 1 bis 11, mit den folgenden wiederkehrenden Schritten:
a) Auftragen des Aufbaumaterials in einem Baufeld in einer Schicht,
b) Abtragen eines unbenutzten Materialrests des Aufbaumaterials aus dem Auftragsvorgang des Schritts a) aus dem Baufeld heraus,
c) teilweises Verfestigen des Aufbaumaterials der in Schritt a) aufgetragenen Schicht durch selektives Bestrahlen von einem Querschnitt des herzustellenden Bauteils entsprechenden Stellen der Schicht mit einem Energiestrahl,
wobei der Materialrest des Schritts b) nur eines Auftragsvorgangs gemäß Schritt a) vor und/oder während des Schritts c) zunächst in einem baufeldnahen Zwischenbehälter aufgefangen und anschließend durch einen mechanisch oder fluidisch angetriebenen Stetigförderer in einen baufeldfernen Überlaufbehälter geleitet wird.

## Claims

1. A device for producing three-dimensional components from a powder material by layered application of the powder material and partial solidification of the powder material of a layer by selectively irradiating points of the layer corresponding to a cross section of the component to be produced by means of at least one energy beam, comprising a construction container (1) for accommodating the powder material, comprising a coating device (2) for the layered application of the powder material, comprising an overflow container (3) for accommodating an unused material residue of a production process,
and comprising a trough-shaped intermediate container (4) for accommodating the unused material residue of an application process and furthermore for delivery to the overflow container (3)
and comprising a transport device (5; 6; 7) acting in the intermediate container, **characterized by** a mechanical or fluidically driven continuous conveyor (5; 6) as transport device.

2. The device according to claim 1, **characterized by** an inclined arrangement of the intermediate container (4).

3. The device according to claim 1 or 2, **characterized by** a screw conveyor (5) or spiral conveyor as transport device.

4. The device according to claim 1 or 2, **characterized by** a belt or chain conveyor (6) as transport device.

5. The device according to one of the preceding claims, **characterized by** an alternatingly driven conveyor (7) as transport device.

6. The device according to claim 5, **characterized by** a transport device (7) comprising a conveying element (71), which is alternatingly moved in the intermediate container (4) in the longitudinal direction thereof.

7. The device according to claim 5 or 6, **characterized by** a linkage for driving the alternatingly moved conveying element (71) in a slow forward motion in the conveying direction (y) and in quick return motion in the opposite direction.

8. The device according to one of claims 5 to 7, **characterized by** a linkage (81), which lowers the alternatingly moved conveying element (71) in the conveying direction (y) and raises it in the opposite direction.

9. The device according to one of the above claims, **characterized in that** the construction container (1) can be removed from the device underneath the intermediate container (4).

10. The device according to one of the above claims, **characterized in that** the intermediate container (4) can be displaced between an operating position and a service position, and the construction container (1) can be removed from the device in a direction towards the intermediate container (4) in the operating position thereof.

11. The device according to one of the above claims, **characterized by** a temperature lock for creating a temperature difference between the intermediate container (4) and the overflow container (3).

12. A method for producing three-dimensional components of a powder material in a device according to one of claims 1 to 11, comprising the following recurring steps:
a) applying the powder material in a construction field of a layer,
b) removing an unused material residue of the powder material from the application process of step a) from the construction field,
c) partial solidification of the powder material of the layer applied in step a) by selectively irradiating points of the layer corresponding to a cross section of the component to be produced by means of an energy beam,
wherein the material residue of step b) of only one application process according to step a) is initially caught in an intermediate container close to the construction field prior to and/or during step c) and is subsequently guided by a mechanical or fluidically driven continuous conveyor into an overflow container at a distance from the construction field.

## Revendications

1. Dispositif, destiné à produire des composants tridimensionnels en une matière reconstitutive pulvérulente, par application couche par couche de la matière reconstitutive et par consolidation partielle de la matière reconstitutive d'une couche par irradiation sélective d'une section transversale de zones de la couche correspondant au composant qui doit être produit à l'aide d'au moins un faisceau énergétique, pourvu d'un récipient structurel (1), destiné à recevoir la matière reconstitutive, pourvu d'un applicateur (2) , pour l'application couche par couche de la matière reconstitutive, pourvu d'un récipient de trop-plein (3), destiné à recevoir un reste de matière non utilisée d'un processus de production,
pourvu d'un récipient intermédiaire (4) en forme de goulotte, destiné à recevoir le reste de matière non utilisée d'un processus d'application et par ailleurs, destiné à le restituer au récipient de trop-plein (3) et
pourvu d'un dispositif de transport (5 ; 6 ; 7) agissant dans le récipient intermédiaire (4),
**caractérisé par**
un convoyeur en continu (5 ; 6) à entraînement mécanique ou fluidique faisant office de dispositif de transport.

2. Dispositif selon la revendication 1, **caractérisé par** un arrangement incliné du récipient intermédiaire (4).

3. Dispositif selon la revendication 1 ou 2, **caractérisé par** un convoyeur à vis (5) ou un convoyeur hélicoïdal faisant office de dispositif de transport.

4. Dispositif selon la revendication 1 ou 2, caractérisé un convoyeur à bande ou un convoyeur à chaîne (6) faisant office de dispositif de transport.

5. Dispositif selon l'une quelconque des revendications ci-dessus, **caractérisé par** un convoyeur (7) à fonctionnement alterné faisant office de dispositif de transport.

6. Dispositif selon la revendication 5, **caractérisé par** un dispositif de transport (7) pourvu d'un élément de convoyage (71), déplacé en alternance dans le récipient intermédiaire (4) dans la direction longitudinale de celui-ci.

7. Dispositif selon la revendication 5 ou 6, **caractérisé par** une transmission d'accouplement, destinée à entraîner l'élément de convoyage (71) déplacé en alternance dans une lente avance dans la direction de convoyage (y) et dans un rapide retour dans la direction opposée.

8. Dispositif selon l'une quelconque des revendications 5 à 7, **caractérisé par** une transmission d'accouplement (81), qui abaisse l'élément de convoyage (71) déplacé en alternance dans la direction de convoyage (y) et le relève dans la direction opposée.

9. Dispositif selon l'une quelconque des revendications ci-dessus, **caractérisé en ce que** le récipient structurel (1) peut se retirer du dispositif par le bas, à travers le récipient intermédiaire (4).

10. Dispositif selon l'une quelconque des revendications ci-dessus, **caractérisé en ce que** le récipient intermédiaire (4) est déplaçable entre une position de travail et une position de service et le récipient structurel (1) peut se retirer du dispositif dans une direction sur le récipient intermédiaire (4) dans sa position de travail.

11. Dispositif selon l'une quelconque des revendications précédentes, **caractérisé par** un sas de température, destiné à générer une température différentielle entre le récipient intermédiaire (4) et le récipient de trop-plein (3).

12. Procédé, destiné à produire des composants tridimensionnels en une matière reconstitutive pulvérulente dans un dispositif selon l'une quelconque des revendications 1 à 11, présentant les étapes récurrentes suivantes, consistant à :
a) Appliquer la matière reconstitutive dans un champ structurel dans une couche,
b) Retirer du champ structurel un reste de matière non utilisée de la matière reconstitutive émanant du processus d'application de l'étape a),
c) Consolider partiellement la matière reconstitutive de la couche appliquée dans l'étape a), par irradiation sélective d'une section transversale de zones de la couche correspondant au composant à l'aide d'un faisceau énergétique,
le reste de matière de l'étape b) d'un seul processus d'application selon l'étape a) étant d'abord recueilli avant et / ou pendant l'étape c) dans un récipient intermédiaire proche du champ structurel et étant dirigé par la suite par convoyeur en continu à entraînement mécanique ou fluidique dans un récipient de trop-plein éloigné du champ structurel.
